Europäisches Patentamt

European Patent Office

Office européen des brevets

(11) Veröffentlichungsnummer: **0 247 530**

**A2**

(12) # EUROPÄISCHE PATENTANMELDUNG

(21) Anmeldenummer: **87107433.2**

(51) Int. Cl.4: **G01B 11/08**

(22) Anmeldetag: **22.05.87**

(30) Priorität: **24.05.86 DE 3617618**

(43) Veröffentlichungstag der Anmeldung:
**02.12.87 Patentblatt 87/49**

(84) Benannte Vertragsstaaten:
**DE GB NL**

(71) Anmelder: **Drechsel, Klaus**
**Deichgrafenweg 17**
**D-2000 Norderstedt(DE)**

(72) Erfinder: **Drechsel, Klaus**
**Deichgrafenweg 17**
**D-2000 Norderstedt(DE)**
Erfinder: **Plambeck, Jens**
**Reichenberger Strasse 117**
**D-2080 Pinneberg(DE)**

(74) Vertreter: **Schöning, Hans-Werner, Dipl.-Ing.**
**Patentanwälte Dipl.-Phys. Ole Niedmers**
**Dipl.-Ing. Hans W. Schöning Jessenstrasse 4**
**D-2000 Hamburg 50(DE)**

(54) **Verfahren und Vorrichtung zur Bestimmung des Durchmessers von Tierdärmen.**

(57) Es wird ein Verfahren sowie eine Vorrichtung zur Bestimmung des Durchmessers (25) von Därmen (19) vorgeschlagen. Dazu ist eine Lichtmeßstrecke (11) aus einer Mehrzahl reihenartig nebeneinander angeordneter Lichtsender (12) vorgesehen und eine Mehrzahl zur Lichtsenderreihe (13) beabstandeter reihenartig nebeneinander angeordnet, jeweils bestimmten Lichtsendern (12) zugeordnete Lichtempfänger (17). Die Lichtsender (12) und die ihnen jeweils zugeordneten Lichtempfänger (17) werden reihenartig im wesentlichen in einem vorbestimmten Schema nacheinander zur Erkennung einer durch einen in die Lichtmeßstrecke (11) eingebrachten Darm (19) aktiviert. Die von den Lichtempfängern (17) abgegebenen Signale werden Signalwandlern (20, 21, 22) zugeführt, deren Ausgangssignale in Speichermitteln (23) geladen werden. Aus den Speichermitteln (23) werden diese nach Abschluß eines Meßvorganges ausgelesen und in eine Auswerteeinrichtung (24) einer Bewertung unterzogen und aus den bewerteten Signalen wird dann der dem ermittelten Durchmesser (25) des Darmes (19) entsprechende Wert berechnet und auf Anzeigemitteln (26) angezeigt.

Fig. 1

## Verfahren und Vorrichtung zur Bestimmung des Durchmessers von Tierdärmen

Die Erfindung betrifft ein Verfahren zur Bestimmung des Durchmessers von Därmen, insbesondere von Naturdärmen verschiedenen tierischen Ursprunges, sowie eine Vorrichtung zur Ausführung dieses Verfahrens.

Bei der Wurstherstellung werden Naturdärme verschiedenen tierischen Ursprunges, beispielsweise vom Schaf, vom Schwein oder vom Rind verwendet, da diese Naturdärme vielfach bessere Eigenschaften als künstliche Därme aufweisen. Im Gegensatz zu künstlichen Därmen, die in vorbestimmten Durchmessern hergestellt werden können, liegen die Naturdärme, selbst wenn sie von einer Tiersorte stammen, in den unterschiedlichsten Durchmessern vor . Für bestimmte Wurstsorten ist jedoch immer ein in einem bestimmten Durchmesserintervall liegender Durchmesser des Damres erforderlich, d.h. die tierischen Därme müssen, bevor sie mit dem Füllgut gefüllt werden, sortiert werden.

Diese Sortierung erfolgte bisher auf sehr mühsame Weise, indem jeder Darm über ein Kaliberdorn einer Vorrichtung gezogen werden mußte, die eine Vielzahl verschiedener Kaliber mit vorbestimmten Durchmessern aufweist. Auch im Sortieren dieser Därme sehr geübte Personen mußten wenigstens zwei, in der Regel sogar drei Meßschritte ausführen, um den Darm einem bestimmten Durchmesserintervall zuordnen zu können. Diese Meßprozedur ist sehr zeitaufwendig und mühsam und erfordert, da Därme dieser Art Massenartikel sind, eine Vielzahl von Arbeitskräften, die parallel derartige Arbeiten ausführen.

Man hat versucht, diese Durchmesserbestimmung der Naturdärme mit einer mechanischen Vorrichtung durchzuführen, die - schiebelehrenähnlich die mit Wasser oder Luft gefüllten Därme mißt, indem der Darm in den Zwischenraum zweier Meßfinger eingespannt wird, die dann aufeinanderzubewegt werden, und zwar manuell betätigt durch eine Bedienungsperson. Wenn die Darmwände von den Meßfingern berührt werden, wurde die Verschiebung gestoppt, und ein Meßwert an Anzeigemitteln der Vorrichtung abgelesen. Es hat sich gezeigt, daß auch diese Vorrichtung im Vergleich zu den voran beschriebenen Kaliberdornen kein wesentlicher Fortschritt ist, da auch mit der Vorrichtung komplizierte und zeitaufwendige Bedienungsschritte ausgeführt werden müssen. Darüber hinaus ist der Verschiebungsmechanismus letztlich der Schwachpunkt dieser Vorrichtung, da die Därme in der Regel beim Meßvorgang sehr feucht sind, das Wasser also von ihnen herabtropft und das Wasser zudem noch einen sehr starken Salzgehalt aufweist. Das führte bei der bekannten Vorrichtung sehr oft binnen kurzer Zeit zu Funktionsstörungen, da Wasser in die Vorrichtung eindrang bzw. wegen des starken Salzgehaltes sehr schnell Korrosionserscheinungen auftraten und die Vorrichtung unbrauchbar wurde.

Es ist Aufgabe der vorliegenden Erfindung, ein Verfahren und eine Vorrichtung zu schaffen, mit dem die Durchmesser von Därmen auf sehr leichte Weise sehr genau bestimmt werden können, und zwar unter der Bedingung, daß keine Deformierung, d.h. Durchmesseränderung während des Meßvorganges auftritt, bei denen keine Ablesefehler durch das Bedienungspersonal auftreten und insgesamt jede Messung in extrem kurzer Zeit durchgeführt werden kann, wobei die Vorrichtung insbesondere von ungelerntem Personal bedient werden kann.

Gelöst wird die Aufgabe gemäß der Erfindung dadurch, daß bei der Ausführung des Verfahrens zwischen einer Lichtmeßstrecke zur Bestimmung des Darmdurchmessers ein Lichtreferenzwert, der einen meßobjektfreien ungedämpften Zustand der Lichtmeßstrecke repräsentiert, ermittelt und festgehalten wird,

daß anschließend nach Auswahl einer Darmsorte eine diesem Darmmedium entsprechende Lichtdämpfungsschwelle im Vergleich zum ungedämpften Licht zwischen der Lichtmeßstrecke festgelegt wird,

daß nachfolgend der Darm in die Lichtmeßstrecke eingebracht und dessen Durchmesser als Funktion einer örtlichen Dämpfung des Lichtes der Lichtmeßstrecke ermittelt und festgehalten wird, und

schließlich nach Abschluß der Durchmesserermittlung unter Berücksichtigung des Lichtreferenzwertes und der festgelegten Lichtdämpfungsschwelle die dem Durchmesser entsprechenden Dämpfungswerte einer Bewertung unterzogen und als endgültige Durchmesser dargestellt werden,

wobei für eine nach b. gewählte Darmsorte anschließend nur noch die Verfahrensschritte c. und d. zur Bestimmung des Durchmessers einer beliebigen Zahl von Därmen gleicher Sorte ausgeführt werden.

Der Vorteil dieses Verfahrens liegt darin, daß eine absolut berührungsfreie Messung des Darmdurchmessers möglich ist, wobei die mit Luft oder Wasser gefüllten Därme beim Meßvorgang keiner Deformierung unterzogen werden. Durch die endgültige Darstellung des Durchmessers auf einer geeigneten Anzeige sind Ablesefehler völlig ausgeschlossen. Der Vorteil ist darüber hinaus eine sehr hohe Meßgeschwindigkeit, da nach einmal vorgenommenen Eich-bzw. Kalibrierungsschritten für eine bestimmte Darmsorte, die automatisch vonstatten gehen können, anschließend nur noch der Darm in die Lichtmeßstrecke gehalten zu werden braucht. Zur Ausführung aller dieser Verfahrensschritte ist kein geschultesPersonal nötig.

Gemäß einer vorteilhaften Ausführungsform des Verfahrens wird der bewertete endgültige Durchmesser einer Mehrzahl verschiedener vorbestimmter Durchmesserintervalle zugeordnet und in ihnen dargestellt. Wie eingangs schon erwähnt, werden in Darmsortieranstalten die Därme der jeweiligen Ursprungsorte bestimmten Durchmesserintervallen zugeordnet. So bilden beispielsweise Schweinedärme mit einem Durchmesser unter 26 mm eine bestimmte Gruppe, die mit einem Durchmesser von 26 bis 28 mm eine bestimmte, die von 28 bis 30 mm eine bestimmte Gruppe usw., d.h. sie werden insgesamt in neun Gruppen aufgeteilt, wobei die letzte Gruppe die darstellt, bei denen die Därme einen Durchmesser von mehr als 40 mm haben. Der Vorteil der vorangehend beschriebenen Ausgestaltung des Verfahrens besteht nun darin, daß die gemessenen Darmdurchmesser diesen voranbeschriebenen Durchmesserintervallen selbständig zugeordnet werden.

Die Vorrichtung zur Lösung der Aufgabe ist dadurch gekennzeichnet, daß eine Lichtmeßstrecke aus einer Mehrzahl reihenartig nebeneinander angeordneter Lichtsender und aus einer Mehrzahl zur Lichtsenderreihe beabstandeter reihenartig nebeneinander angeordneter, jeweils bestimmten Lichtsendern zugeordneten Lichtempfängern besteht, wobei die Lichtsender und die ihnen jeweils zugeordneten Lichtempfänger reihenartig im wesentlichen in einem vorbestimmten Schema nacheinander zur Erkennung einer durch einen in die Lichtmeßstrecke eingebrachten Darm aktiviert werden, und daß die von den Lichtempfängern abgegebenen Signale Signalwandlern zugeführt werden, deren Ausgangssignale in Speichermitteln geladen werden, aus denen diese nach Abschluß eines Meßvorganges ausgelesen und in einer Auswerteeinrichtung einer Bewertung unterzogen und aus den bewerteten Signalen der dem ermittelten Durchmesser des Darmes entsprechende Werte berechnet und auf Anzeigemitteln angezeigt wird.

Der Vorteil dieser Vorrichtung besteht darin, daß im Gegensatz zu den bekannten Meßvorrichtungen keinerlei mechanische Meßelemente vorhanden sind, die durch das aggressive Medium Wasser in Verbindung mit Salz geschädigt werden können. Darüber hinaus ist auch kein Überstreifen über irgendwelche Kaliberdorne oder ein Einspannen notwendig, da die Vorrichtung nur auf optischem Wege mit optischen Mitteln arbeitet. Auch können deshalb vorteilhafterweise keinerlei Beschädigungen des Darmes beim Meßvorgang auftreten und die Meßgeschwindigkeit hängt einzig und allein von der internen Arbeitsgeschwindigkeit der optischen Elemente wie Sensor und Empfänger und der vorrichtungsinternen Bearbeitungsgeschwindigkeit der von diesem gelieferten Signale ab.

Die Funktion der Vorrichtung ist grundsätzlich durch die vorangehend beschriebenen Mittel sichergestellt. Um jedoch eine größere Sicherheit bei der Bestimmung des Durchmessers der Därme zu erreichen, ist gemäß einer vorteilhaften Ausführungsform eine weitere, im wesentlichen zur ersten Lichtsenderreihe beabstandete Mehrzahl von Lichtsendern vorgesehen, wobei der Abstand jeder Lichtsenderreihe zur Lichtempfängerreihe gleich groß ist. Ausgehend vom Lichtempfänger, wird mit den beiden ihm zugeordneten Lichtsendern ein gleichschenkeliges Dreieck gebildet, d.h. die Abstände von den Lichtsendern beider Reihen zu den Lichtempfängern der Lichtempfängerreihe ist immer gleich groß. Der wesentliche Vorteil dieser Anordnung ist, daß dann, wenn ein Darm in die Lichtmeßstrecke gehalten wird, das Wassersalzgemisch vom Darm so abtropft, daß es in den Bereich zwischen den beiden parallel beabstandeten Lichtsenderreihen fällt. Die Lichtsenderreihen selbst werden dabei in der Regel dann vom Wassersalzgemisch frei sein, so daß der Strahlenweg zwischen den Sendern und Empfängern nicht durch das Wassersalzgemisch gestört wird.

Die Meßauflösung der Vorrichtung wird im wesentlichen durch den Abstand der Lichtsender der Reihe zueinander bzw. durch den Abstand der Lichtempfänger der Lichtempfängerreihe zueinander bestimmt. Bei handelsüblichen Lichtsendern beträgt beispielsweise der Abstand zweier Lichtsender voneinander 2,54 mm, d.h. 1/10". Um jedoch die Auflösung größer als 2,54 mm zu machen, dieser Wert reicht vielfach nicht zur genauen Bestimmung des Darmdurchmessers aus, ist gemäß einer weiteren vorteilhaften Ausführungsform um die halbe Breite eines Lichtsenders der Lichtsenderreihe versetzt aneinandergrenzend eine weitere Lichtsenderreihe vorgesehen.

Um zu den angestrebten sehr kleinen Auflösungen, beispielsweise 0,635 mm zu kommen, werden die Lichtsender den Lichtempfängern zur Ermittlung des Durchmessers des Darmes gemäß folgender Zuordnungsvorschrift zueinander aktiviert:

a. Der erste Lichtsender der ersten Lichtsenderreihe wird zusammen mit dem ihm gegenüberliegenden ersten Lichtempfänger der Lichtempfängerreihe aktiviert,

b. der erste Lichtsender der ersten Lichtsenderreihe wird zusammen mit dem dem gegenüberliegenden ersten Lichtempfänger nachfolgend benachbarten zweiten Lichtempfänger der Lichtempfängerreihe aktiviert,

c. der zweite Lichtsender der ersten Lichtsenderreihe wird zusammen mit dem ihm gegenüberliegenden zweiten Lichtempfänger vorangehend benachbarten ersten Lichtempfänger der Lichtempfängerreihe aktiviert,

d. der um die halbe Breite eines Lichtsenders der Lichtsenderreihe versetzte erste Lichtsender der versetzten Lichtsenderreihe wird zusammen mit dem ersten Lichtempfänger der Lichtempfängerreihe aktiviert,

e. der erste Lichtsender der versetzten Lichtsenderreihe wird zusammen mit dem dem ersten Lichtempfänger nachfolgenden zweiten Lichtempfänger der Lichtempfängerreihe aktiviert und

f. der Aktivierungszyklus nach den Schritten a. bis e. wird nachfolgend nach diesem Schrittschema für alle nachfolgenden Lichtsender und Lichtempfänger der Lichtsenderreihe und der Lichtempfängerreihe durchgeführt.

Bei einem vorausgesetzten Abstand zweier unmittelbar benachbarter Lichtsender von 2,54 mm und vorausgesetztem Abstand zweier Lichtempfänger von 2,54 mm und bei dazwischen, d.h. um 1,25 mm dazu versetzt angeordneten weiteren Lichtsendern, kann durch die voran beschriebene Aktivierungsregel zwischen den Lichtsendern und den Lichtempfängern, wie gewünscht, eine Auflösung von 0,635 mm erreicht werden.

Da nur die Lichtmeßstrecke zwischen Lichtsendern und Lichtempfängern wesentlich für die Messung ist, kann die relative Lage der Lichtsender zu den Lichtempfängern grundsätzlich beliebig gestaltet sein. Es hat sich jedoch als sehr vorteilhaft erwiesen, in der Vorrichtung den Lichtempfänger in im wesentlichen vertikaler Richtung oberhalb des Lichtsenders anzuordnen, wobei bei der Ausführungsform mit zwei oder mehreren voneinander beabstandeten Lichtsenderreihen dann das Lot von den Lichtempfängern in den Bereich zwischen den Lichtsenderreihen fällt. Diese Ausführungsform verhindert, daß störendes Restlicht die Messung verfälscht.

Vorzugsweise sind die Lichtempfänger zur Vermeidung des Empfanges von nicht von den ihnen zugeordneten Lichtsendern herrührenden Streulichtes mit einer Blendeinrichtung derart abgedeckt, daß um die Lichtempfängerstrahlenachse herum nur in einem Lichtkegel mit vorbestimmten Öffnungswinkel Licht auf die Lichtempfänger treffen kann. Durch diese zusätzliche Maßnahme ist eine exakte Bestimmung des Durchmessers entsprechend der gewünschten Auflösung möglich.

Um die Lichtsender selbst vor abtropfendem, extrem salzhaltigem Wasser zu schützen, sind die Lichtsender in Lichtaustrittsrichtung mit einer lichtdurchlässigen Abdeckung bedeckt. Diese lichtdurchlässige Abdeckung ist dann relativ zur Lichtstrahlenachse zwischen Lichtsensor und Lichtempfänger geneigt, wenn gemäß einer weiteren vorteilhaften anderen Ausführungsform der Vorrichtung wenigstens oberhalb der voneinander beabstandeten ersten und zweiten Lichtsenderreihen ein Abdeckgehäuseteil der Vorrichtung derart geformt ist, daß im Bereich zwischen den Lichtsenderreihen eine Flüssigkeitsauffangrinne gebildet wird. Die Flüssigkeitsauffangrinne, die einen dreieckförmigen Querschnitt aufweisen kann, bildet zusammen mit dem lichtdurchlässigen Abdeckungen beider voneinander beabstandeter Lichtsenderreihen im Querschnitt zwei aneinanderstoßende Dreiecke, wobei die zwischen beiden aneinanderstoßenden Dreiecken gebildete Vertiefung die Flüssigkeitsauffangrinne ist. Es sei jedoch hervorgehoben, daß auch beliebige andere geeignete Flüssigkeitsauffangrinnenformen möglich sind, die verhindern, daß das Wassersalzgemisch auf die Abdeckungen oberhalb der Lichtsender tropft bzw. fließt.

Die Lichtempfänger der Vorrichtung sind bei einer vorteilhaften Ausgestaltung in einem stegartig aus dem Gehäuse der Vorrichtung herausstehenden schmalen Gehäusearm angeordnet, was den Vorteil hat, daß der im Durchmesser zu bestimmende Darm nicht gespannt zu werden braucht, was zu der auf alle Fälle zu vermeidenden Verformung führen würden, sondern lediglich, wegen des schmalen Gehäusearmes, locker um ihn herumgeführt zu werden braucht.

Vorteilhafterweise sind die Lichtempfänger lichteintrittsseitig mit einer lichtdurchlässigen Abdeckung abgedeckt, wobei diese Abdeckung im wesentlichen dazu dient, die Lichtempfänger vor Wasser, Salz oder sonstigen Beschädigungen zu schützen.

Grundsätzlich kann das Anzeigemittel zur Anzeige des gemessenen Durchmessers beliebiger Art sein. Es ist jedoch vorteilhaft, das Anzeigemittel durch eine numerische Anzeige, beispielsweise eine sogenannte 7-Segmentanzeige,

zur Anzeige des Durchmessers des Darmes in bestimmten Maßeinheiten, beispielsweise in Millimetern oder Zoll, zu bilden.

Alternativ zu dieser Anzeige in bestimmten Maßeinheiten oder zusätzlich zu ihr ist schließlich gemäß einer anderen vorteilhaften Ausführungsform der Vorrichtung eine Mehrzahl von Anzeigemitteln vorgesehen, die jeweils einem bestimmten Durchmesserintervall zugeordnet sind, wobei die Auswerteeinrichtung den ermittelten Darmdurchmesser dem Anzeigemittel des entsprechenden Durchmesserintervalls selbständig zuordnet, wie es beispielsweise in normähnlichen Festlegungen in Darmsortieranstalten üblich ist. Diese Anzeigemittel zur Darstellung der Darmdurchmesserintervalle können durch eine Signallampe oder dergl. gebildet sein und zusätzlich noch durch bestimmte, normähnliche Farbgebungen markiert sein.

Die Erfindung wird nun unter Bezugnahme auf die nachfolgenden schematischen Zeichnungen anhand eines Ausführungsbeipieles eingehend beschrieben.

Darin zeigen:

Fig. 1 in perspektivischer Darstellung eine Vorrichtung zum Messen der Durchmesser von Därmen,

Fig. 2 schematisiert den Lichtstrahlengang von zwei Lichtsenderreihen auf eine Lichtempfängerreihe, wobei ein Darm in die Lichtmeßstrecke zwischen den Lichtsenderreihen und der Lichtempfängerreihe eingebracht ist,

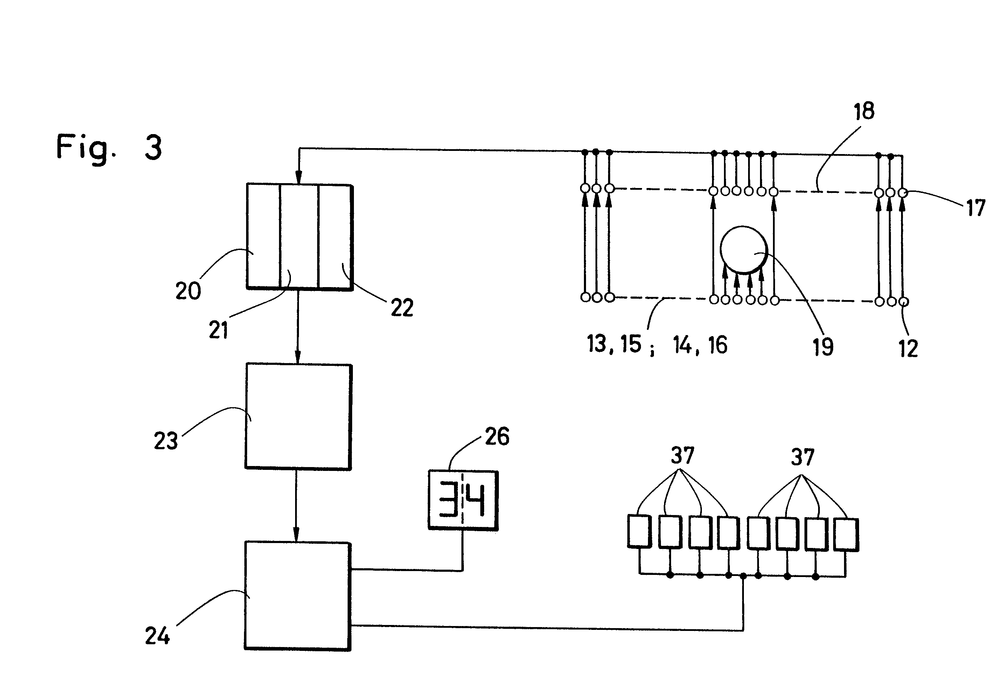

Fig. 3 ein Blockschaltbild zur Erläuterung des prinzipiellen Aufbaues der Steuerschaltung der Vorrichtung,

Fig. 4 einen Ausschnitt aus Lichtsenderreihen und der Lichtempfängerreihe zur Erläuterung der Aktivierungszyklen zwischen den einzelnen Lichtsendern und den Lichtempfängern,

Fig. 5 symbolisch eine komplette Anordnung aus vier Lichtsenderreihen und einer Lichtempfängerreihe,

Fig. 6 im Schnitt in vergrößerter Darstellung eine Blendeinrichtung mit darin eingesetztem Lichtempfänger und

Fig. 7 eine Draufsicht auf die in Fig. 6 dargestellte Blendeinrichtung von unten in gegenüber Fig. 6 verkleinertem Maßstab.

Die Vorrichtung 10 besteht im wesentlichen aus einem Gehäuse 32, in dem unter einem unteren flachen Abdeckgehäuseteil 33 mehrere Lichtsenderreihen 13 , 14, 15, 16 angeordnet sind. Oberhalb der Lichtsenderreihen 13 bis 16 ist in einem aus dem Gehäuse 32 herausstehenden schmalen Gehäusearm 35 eine Lichtempfängerreihe 17 angeordnet. Die Lichtsenderreihen 13 bis 16 und die Lichtempfängerreihe 18 sind im wesentlichen parallel zueinander angeordnet.

Die Lichtsenderreihe 13 und die dazu versetzte Lichtsenderreihe 15, vergleiche auch Fig. 5, sind ebenso wie die Lichtsenderreihe 14 und die dazu aneinandergrenzend benachbarte Lichtsenderreihe 16 so im Abdeckdeckgehäuseteil 33 angeordnet, daß oberhalb dieser voneinander beabstandeten Lichtsenderreihen eine Ausformung mit dreieckförmigem Querschnitt gebildet wird. Im Bereich zwischen diesen dreieckförmigen Ausformungen wird eine Flüssigkeitsauffangrinne 34 gebildet, in die vom Darm 19, der in die Lichtmeßstrecke 11 zwischen Lichtsendern und Lichtempfängern zur Messung eingebracht wird, Wasser hineintropft und von dort ablaufen kann. Die Ausformungen, unter denen die Lichtsenderreihen 13 bis 16 liegen, ist jeweils, d.h. paarweise für die Lichtsenderreihe 13 und 15 bzw. 14 und 16 mit einer lichtdurchlässigen Abdeckung versehen.

Auch die Lichtempfängerreihe 17, die in dem Gehäusearm 35 angeordnet ist, ist mit einer lichtdurchlässigen Abdeckung 36 versehen, mit der die in den Figuren 5 und 7 dargestellte Blendeinrichtung 27 von unten abgedeckt ist.

An einem oberen Teil des Gehäuses 32 ist ein Anzeigemittel 26 angebracht, das gemäß der Darstellung in Form einer zweistellungen numerischen Leuchtanzeige (7-Segmentanzeige) ausgebildet ist. Unterhalb des Anzeigemittels 26 ist eine Mehrzahl von Anzeigemitteln 27 angeordnet, in denen beispielsweise eine Signallampe oder dergl. angebracht sein kann. Darüber hinaus können die Anzeigemittel 27 in einer vorbestimmten Farbgebung gekennzeichnet sein, die entsprechend einer normmäßigen Vorgabe, die von Darmsortieranstalten im allgemeinen benutzt werden, gekennzeichnet sind. Das Anzeigemittel 26 zeigt den ermittelten Darmdurchmesser in einer vorbestimmten Maßeinheit numerisch an, beispielsweise in Millimetern, in Zoll oder dergl. Die Anzeigemittel 37 zeigen den Darmdurchmesser 25 des Darmes 19 in Darmdurchmesserintervallen an, d.h. Därme bestimmter Durchmesser werden bestimmt Anzeigen 37 zugeordnet. Die Ermittlung des Darmdurchmessers 25 wird eingehend weiter unten beschrieben.

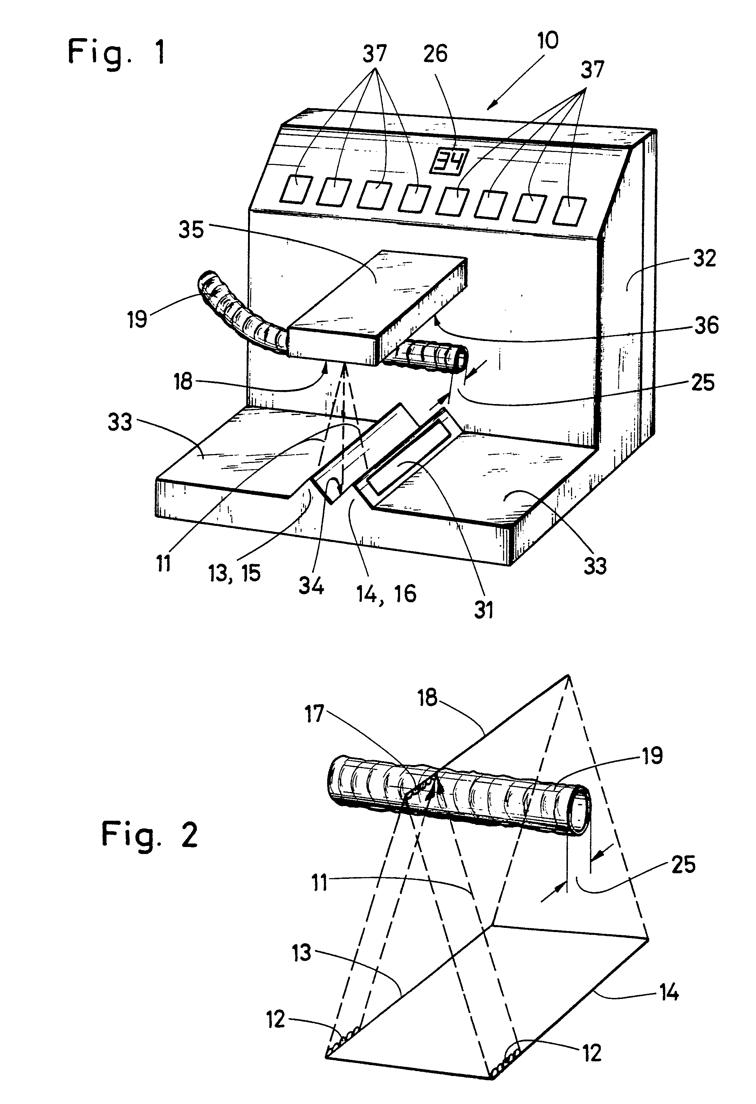

Unter Bezugnahme auf die Fig. 2, 4 und 5 ist ersichtlich, daß jede Lichtsenderreihe 13 bis 16 aus 48 unmittelbar benachbarten Lichtsendern 12 bestehen, wobei zwei Lichtsender voneinander hier einen Abstand von 2,54 mm haben. Jede Lichtsenderreihe wird in dem hier dargestellten Ausführungsbeispiel aus 48 Lichtsendern gebildet. Es ist aber auch grundsätzlich möglich, die Anzahl der Lichtsender 12 bei anderen Ausführungsformen zu variieren. Bei der hier dargestellten Ausführungsform ist um die halbe Breite des Lichtsenders 12 der Lichtsenderreihen 13, 14 versetzt aneinandergrenzend eine weitere Lichtsenderreihe 15, 16 vorgesehen. Relativ zur Lichtempfängerreihe 18 ist somit alle 1,25 mm ein Lichtsender 12 bei den Lichtsenderreihen 13, 14 und den Lichtsenderreihen 14, 16 vorgesehen, wenn vorausgesetzt wird, daß der normale Abstand zweier Lichtsender 12 einer Reihe einen Abstand von 2,54 mm hat.

Das Raster von 2,54 mm der Lichtsender 12 untereinander ist bei bestimmten Lichtsenderbausteinen vorgegeben, auch hier sind aber auch grundsätzlich andere Abstände möglich.

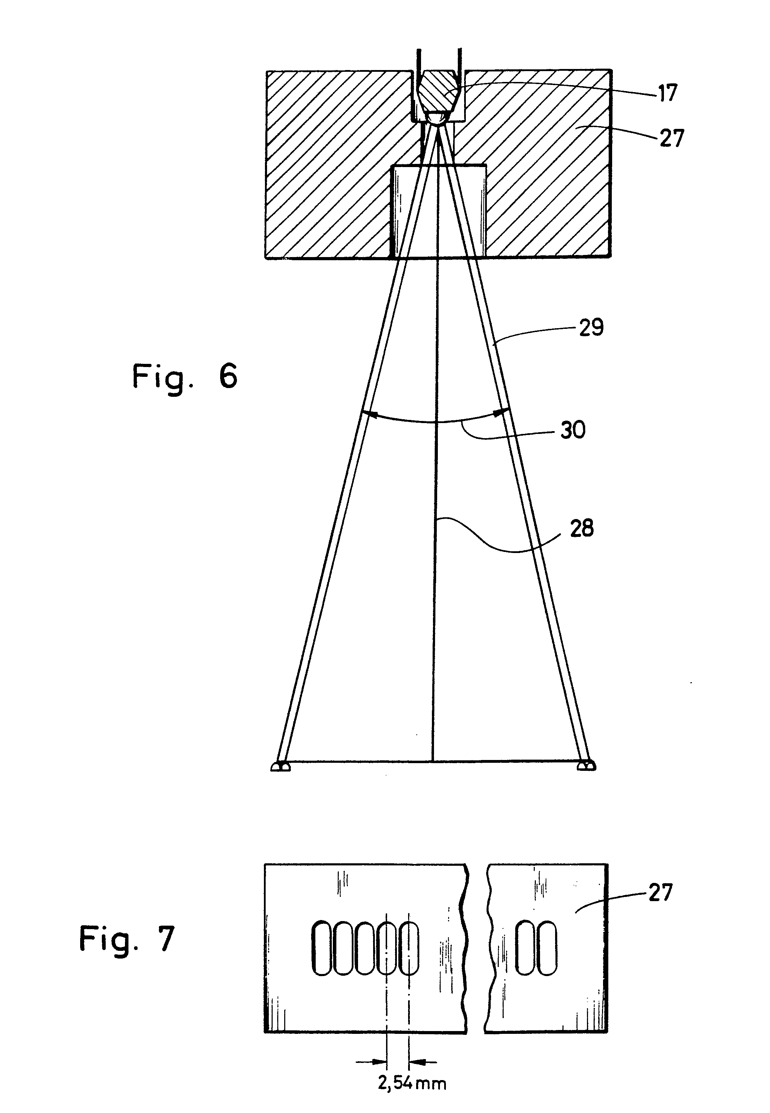

Damit sichergestellt ist, daß lediglich zwei in der Reihe um maximal 2,54 mm benachbarte Lichtsender 12 auf einen Lichtempfänger 17 einwirken können, d.h. nur diese Korrelation gegeben sind, ist eine Blendeinrichtung 27 vor den Lichtempfängern 17 bzw. der gesamten Lichtempfängerreihe 18 vorgesehen, wie es in Fig. 6 und 7 dargestellt ist. Dadurch wird der Empfang von nicht von den jeweiligen, vorgenannten Lichtsendern 12 herrührendem Streulicht vermindert, was zur Verfälschung der Messung führen kann. Durch die Blendeinrichtung 27 wird um die Lichtempfängerstrahlenachse 28 herum nur ein Lichtkegel 29 mit vorbestimmten Öffnungswinkel geschaffen, weil nur innerhalb dieses Lichtkegels 29 liegendes Licht auf die Lichtempfänger 17 treffen kann.

Die Lichtsender 12 und die Lichtempfänger 17 werden durch hier nicht gesondert dargestellte elektronische Multiplexeinrichtungen zyklisch angesteuert, wobei die Lichtempfänger 17 erkennen, ob in der Lichtmeßstrecke 11, vergl. insbesondere Figuren 1 und 2, ein Darm 19 ist. Sämtliche zyklisch erzeugte, von den Lichtempfängern 17 dann erzeugten Signale werden auf Signalwandler 20, 21, 22 gegeben, die bei dem hier besprochenen Ausführungsbeispiel Analog-Digitalwandler sind. Sämtliche dann umgewandelten digitalen Signale werden nachfolgend in Speichermitteln, die gewöhnliche Digitalspeicher sein können, gespeichert. Die Bewertung der komplett pro Auslesezyklus abgespeicherten Signale erfolgt nachfolgend in einer Auswerteeinrichtung 24, die gleichzeitig die gesamte Steuerung des Auslesezyklus zwischen Lichtsendern 12 und Lichtempfängern 17 steuert. Zu diesem Zweck ist es vorteilhaft, die Auswerteeinrichtung 24 in Form eines Microprozessors auszubilden, es sind jedoch aber auch grundsätzlich fest verdrahtete Rechenwerke für diese Zwecke einsetzbar. Die von der Auswerteeinrichtung 24 bzw. vom Microprozessor nach Abschluß des Auslesezyklus bewerteten Daten werden nachfolgend zur Berechnung des endgültigen Durchmessers 25 des Darmes 19 herangezogen. Der endgültige Darmdurchmesserwert wird dann auf dem Anzeigemittel 26 angezeigt. Parallel dazu oder auch gesondert kann der berechnete Wert einem Darmdurchmesserintervall, das vorbestimmt ist, zugeordnet und mit den gesonderten Anzeigemitteln 37 angezeigt werden.

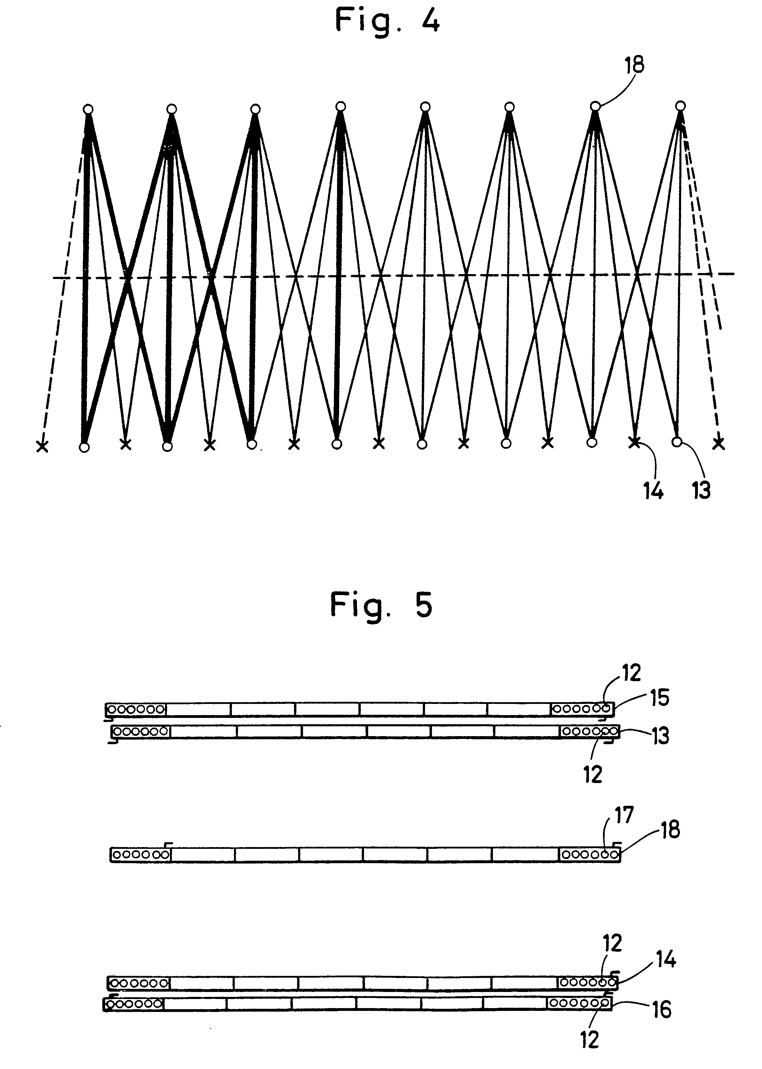

Um eine möglichst hohe Auflösung bei der Bestimmung des Darmdurchmessers zu erreichen, werden die Lichtsender 12 den Lichtempfängern 17 gemäß folgender Zuordnungsvorschrift zueinander aktiviert, vergl. Fig. 4:
der

a. erste Lichtsender 12 der ersten Lichtsenderreihe 13 wird zusammen mit dem ihm gegenüberliegenden ersten Lichtempfänger 17 der Lichtempfängerreihe 18 aktiviert,

b. der erste Lichtsender 12 der ersten Lichtsenderreihe 13 wird zusammen mit dem dem gegenüberliegenden ersten Lichtempfänger 17 nachfolgend benachbarten zweiten Lichtempfänger 17 der Lichtempfängerreihe aktiviert,

c. der zweite Lichtsender 12 der ersten Lichtsenderreihe 13 wird zusammen mit dem ihm gegenüberliegenden zweiten Lichtempfänger vorangehend benachbarten ersten Lichtempfänger 17 der Lichtempfängerreihe 18 aktiviert,

d. der um die halbe Breite eines Lichtsenders 12 der Lichtsenderreihe 13 versetzte erste Lichtsender 12 der versetzten Lichtsenderreihe 15 wird zusammen mit dem ersten Lichtempfänger 17 der Lichtempfängerreihe 18 aktiviert,

e. der erste Lichtsender der versetzten Lichtsenderreihe 15 wird zusammen mit dem dem ersten Lichtempfänger 12 nachfolgenden zweiten Lichtempfänger 12 der Lichtempfängerreihe 18 aktiviert,

f. der Aktivierungszyklus nach den Schritten a. bis e. wird nachfolgend nach diesem Schrittschema alle nachfolgenden Lichtsender 12 und Lichtempfänger 17 der Lichtsenderreihen 13 , 15, 14, 16 und der Lichtempfängerreihe 18 durchgeführt.

Wenn man die Lichtsenderreihen 13, 15 und die Lichtsenderreihen 14, 16, vergl. Fig. 5, jeweils als eine Gruppe betrachtet, wird gemäß der hier beschriebenen Ausführungsform jede Gruppe innerhalb von 10 msec durchlaufen, d.h. die Durchlaufzeit beider Gruppen zusammen beträgt 20 msec. Nachfolgend wird innerhalb von 4 msec aus den in den Speichermitteln 23 gespeicherten Daten im Microprozessor (Auswerteeinrichtung 24) der endgültige Durchmesserwert bewertet und endgültig berechnet und angezeigt. Dann beginnt ein vollständig neuer Zyklus der Aktivierung aller Lichtsender 12 und Lichtempfänger 17 auf gleiche Weise, wie vorangehend beschrieben. Eine Besonderheit der hier beschriebenen Ausführungsform ist noch, daß tatsächlich nicht alle Lichtsender 12 bzw. Lichtempfänger 17 nacheinander aktiviert werden, sondern daß quasi 3-fach parallel die serielle Aktivierung erfolgt, so daß das Auslesesystem insgesamt gegenüber einer rein seriellen Auslesung - schneller wird.

Bevor jedoch eine Bestimmung des Durchmessers der Därme erfolgen kann, muß die Vorrichtung zunächst zum Zwecke einer späteren Normierung der Vorrichtung auf bestimmte Darmsorten in einen Zustand der ungedämpften Messung, d.h. ohne Einbringen eines Darmes 19 in die Lichtmeßstrecke 11 überführt werden. Durch den Microprozessor (Auswerteeinrichtung 24) kann dieser Zustand selbsttätig durch einen bestimmten Programm-bzw. Kommandoschritt erreicht werden, es ist jedoch auch denkbar, diesen Zustand durch einen gesonderten Befehl der Vorrichtung 10 mitzuteilen. Der so erhaltene Lichtreferenzwert, der einen meßobjektfreien ungedämpften Zustand der Lichtmeßsrecke repräsentiert, wird ermittelt und festgehalten.

Nach anschließender Auswahl der Darmsorte, beispielsweise Schafsdärme, wird eine diesem Darmmedium entsprechende Lichtdämpfungsschwelle im Vergleich zum ungedämpften Licht zwischen der Lichtmeßstrecke 11 festgelegt.

Nachfolgend wird der Darm 19 in die Lichtmeßstrecke 11 eingebracht und dessen Durchmesser 25 als Funktion einer örtlichen Dämpfung des Lichtes der Lichtmeßstrecke, die durch die Lichtsenderreihen 13 bis 16 und die Lichtempfängerreihe 18 gebildet wird, ermittelt und festgehalten.

Nach Abschluß der Ermittlung des Darmdurchmessers 25 werden unter Berücksichtigung des Lichtreferenzwertes und der festgelegten Lichtdämpfungsschwelle die dem Durchmesser entsprechenden Dämpfungswerte einer Bewertung unterzogen, wobei u.a. der größte zusammenhängende Durchmesserbereich einer Messung ermittelt wird. Dann wird der endgültige Durchmesser 25 auf den Anzeigemitteln 34 bzw. 37 dargestellt. Die Messung selbt kann für die Sendergruppe 13, 15 und die Sendergruppe 14, 16 getrennt durchgeführt werden. Im übrigen wird ständig ein Mittelwert über eine größere Anzahl von Einzelmessungen bestimmt. Wenn beide Mittelwerte beider Sendergruppen 13, 15 bzw. 14, 16 vorliegen und sie innerhalb vorgegebener Grenzen liegen, wird der Mittelwert neu über beide Gruppen gemeinsam berechnet und zur Anzeige gebracht. Bei zu großen Abweichungen wird der größere Einzelmittelwert zur Anzeige gebracht.

Es wird noch gesondert hervorgehoben, daß die vorangehend beschriebene Vorrichtung 10 grundsätzlich mit beliebigem geeigneten Licht, das die Lichtsender 12 emittieren, arbeiten kann. Es hat sich jedoch als sehr vorteilhaft erwiesen, als Licht Infrarotlicht zu verwenden, d.h. als Lichtsender 12 Infrarot-Sender und als Lichtempfänger 17 Infrarot-Empfänger zu verwenden.

Auch sei noch gesondert hervorgehoben, daß die Anzahl der Lichtsenderreihen, die im vorliegenden Beispiel auf vier beschränkt ist, noch weiter erhöht werden kann, um noch größere Meßauflösungen zu erreichen.

Schließlich sei noch hervorgehoben, daß im Gehäuse 32 der Vorrichtung 10 mechanische Meßeinrichtungen, wie sie bei im Stand der Technik bekannten Geräten vorhanden sind, vollkommen fehlen. Aus diesem Grunde kann die erfindungsgemäße Vorrichtung 10 hermetisch abgedichtet sein, d.h. es besteht für die aggressive Wasser-/Salzlösung, die die Därme 19 umgibt, keine Möglichkeit, in die Vorrichtung einzudringen und diese funktionsunfähig zu machen. Aus diesem Grunde wird das Gehäuse 32 auch aus sehr korrosionsbeständigem Edelstahl, beispielsweise V4A-Stahl hergestellt.

Bezugszeichenliste

    10 Vorrichtung
    11 Lichtmeßstrecke
    12 Lichtsender
    13 Lichtsenderreihe (1.)
    14 Lichtsenderreihe (2.)
    15 Lichtsenderreihe (zur ersten versetzt)
    16 Lichtsenderreihe (zur zweiten versetzt)
    17 Lichtempfänger
    18 Lichtempfängerreihe
    19 Darm
    20 Signalwandler
    21 Signalwandler
    22 Signalwandler
    23 Speichermittel
    24 Auswerteeinrichtung (Microprozessor)
    25 Darmdurchmesser
    26 Anzeigemittel
    27 Blendeinrichtung
    28 Lichtempfängerstrahlenachse
    29 Lichtkegel
    30 Öffnungswinkel
    31 Abdeckung
    32 Gehäuse
    33 Abdeckgehäuseteil
    34 Flüssigkeitsauffangeinrichtung
    35 Gehäusearm
    36 Abdeckung
    37 Anzeigemittel

**Ansprüche**

1. Verfahren zur Bestimmung des Durchmessers von Därmen, insbesondere von Naturdärmen verschiedenen tierischen Ursprungs, dadurch gekennzeichnet, daß

a. zwischen einer Lichtmeßstrecke zur Bestimmung des Darmdurchmessers ein Lichtreferenzwert, der einen meßobjektfreien ungedämpften Zustand der Lichtmeßstrecke repräsentiert, ermittelt und festgehalten wird,

b. daß anschließend nach Auswahl einer Darmsorte eine diesem Darmmedium entsprechende Lichtdämpfungsschwelle im Vergleich zum ungedämpften Licht der Lichtmeßstrecke festgestellt wird,

c. daß nachfolgend der Darm in die Lichtmeßstrecke eingebracht und dessen Durchmesser als Funktion einer örtlichen Dämpfung des Lichtes der Lichtmeßstrecke ermittelt und festgehalten wird, und

d. schließlich nach Abschluß der Durchmesserermittlung unter Berücksichtigung des Lichtreferenzwertes und der festgelegten Dämpfungsschwelle die dem Durchmesser entsprechenden Dämpfungswerte einer Bewertung unterzogen und als endgültige Durchmesser dargestellt werden,

e. wobei für eine nach b. gewählte Darmsorte anschließend nur noch die Verfahrensschritte c. und d. zur Bestimmung des Durchmessers einer beliebigen Zahl von Därmen gleicher Sorte ausgeführt werden.

2. Verfahren nach Anspruch 1, dadurch gekennzeichnet, daß der bewertete endgültige Durchmesser einer Mehrzahl verschiedener vorbestimmter Durchmesserintervalle zugeordnet und in ihnen dargestellt wird.

3. Vorrichtung zur Bestimmung des Durchmessers von Därmen, insbesondere von Naturdärmen verschiedenen tierischen Ursprungs, zur Ausführung des Verfahrens nach einem oder beiden der Ansprüche 1 oder 2, dadurch gekennzeichnet, daß eine Lichtmeßstrecke (11) aus einer Mehrzahl reihenartig nebeneinander angeordneter Lichtsender (12) und aus einer Mehrzahl zur Lichtsenderreihe (13) beabstandeter reihenartig nebeneinander angeordneter, jeweils Lichtsendern (12) zugeordneten Lichtempfängern (17) besteht, wobei die Lichtsender (12) und die ihnen jeweils zugeordneten Lichtempfänger (17) reihenartig im wesentlichen in einem vorbestimmten Schema nacheinander zur Erkennung einer durch einen in die Lichtmeßstrecke (11) eingebrachten Darm (19) aktiviert werden, und daß die von den Lichtempfängern (17) abgegebenen Signale Signal-wandlern (20, 21, 22) zugeführt werden, deren Ausgangssignal in Speichermitteln (23) geladen werden, aus denen diese nach Abschluß eines Meßvorganges ausgelesen und in einer Auswerteeinrichtung (24) einer Bewertung unterzogen und aus den bewerteten Signalen der dem ermittelten Durchmesser (25) des Darmes (19) entsprechende Wert berechnet und auf Anzeigemitteln (26) angezeigt wird.

4. Vorrichtung nach Anspruch 3, dadurch gekennzeichnet, daß eine weitere, im wesentlichen zur ersten Lichtsenderreihe (13) parallel beabstandete Mehrzahl von Lichtsendern (12) vorgesehen ist, wobei der Abstand jeder Lichtsenderreihe (13, 14) zur Lichtempfängerreihe (18) gleich groß ist.

5. Vorrichtung nach einem oder beiden der Ansprüche 3 oder 4, dadurch gekennzeichnet, daß um die Halbe Breite eines Lichtsenders (12) der Lichtsenderreihe (13) versetzt aneinandergrenzend eine weitere Lichtsenderreihe (15, 16) vorgesehen ist.

6. Vorrichtung nach Anspruch 5, dadurch gekennzeichnet, daß die Lichtsender (12) den Lichtempfängern (17) zur Ermittlung des Durchmessers (25) des Darmes (19) gemäß folgender Zuordnungsvorschrift zueinander aktiviert werden:

a. Der erste Lichtsender (12) der ersten Lichtsenderreihe (13) wird zusammen mit dem ihm gegenüberliegenden ersten Lichtempfänger (17) der Lichtempfängerreihe (18) aktiviert,

b. der erste Lichtsender (12) der ersten Lichtsenderreihe (13) wird zusammen mit dem dem gegenüberliegenden ersten Lichtempfänger (17) nachfolgend benachbarten zweiten Lichtempfänger (17) der Lichtempfängerreihe (18) aktiviert,

c. der zweite Lichtsender (12) der ersten Lichtsenderreihe (13) wird zusammen mit dem ihm gegenüberliegenden zweiten Lichtempfänger (17) vorangehend benachbarten ersten Lichtempfänger (17) der Lichtempfängerreihe (18) aktiviert,

d. der um die halbe Breite eines Lichtsenders (12) der Lichtsenderreihe (13) versetzte erste Lichtsender (12) der versetzten Lichtsenderreihe (15) wird zusammen mit dem ersten Lichtempfänger (17) der Lichtempfängerreihe (18) aktiviert.

e. der erste Lichtsender (12) der versetzten Lichtsenderreihe (15) wird zusammen mit dem dem ersten Lichtempfänger (12) nachfolgenden zweiten Lichtempfänger (12) der Lichtempfängerreihe (18) aktiviert und

f. der Aktivierungszyklus nach den Schritten a. bis e. wird nachfolgend nach diesem Schrittschema für alle nachfolgenden Lichtsender (12) und Lichtempfänger (17) der Lichtsenderreihen (13, 15, 14, 16) und der Lichtempfängerreihe (18) durchgeführt.

7. Vorrichtung nach einem oder mehreren der Ansprüche 3 bis 5, dadurch gekennzeichnet, daß die Lichtempfänger (17) in im wesentlichen vertikaler Richtung oberhalb der Lichtsender (12) angeordnet sind.

8. Vorrichtung nach einem oder mehreren der Ansprüche 3 bis 7, dadurch gekennzeichnet, daß die Lichtempfänger (17) zur Vermeidung des Empfanges von nicht von den Lichtsendern (12) herrührenden Streulichtes mit einer Blendeinrichtung (27) derart abgedeckt sind, daß um die Lichtempfängerstrahlenachse (28) herum nur in einem Lichtkegel (29) mit vorbestimmten Öffnungswinkel (30) Licht auf die Lichtempfänger (17) treffen kann.

9. Vorrichtung nach einem oder mehreren der Ansprüche 3 bis 8, dadurch gekennzeichnet, daß die Lichtsenderreihen(12) in Lichtaustrittsrichtung mit einer lichtdurchlässigen Abdeckung (31) bedeckt sind.

10. Vorrichtung nach einem oder mehreren der Ansprüche 4 bis 9, dadurch gekennzeichnet, daß wenigstens oberhalb der voneinander beabstandeten ersten und zweiten Lichtsenderreihen (13, 14) ein Abdeckgehäuseteil (33) der Vorrichtung (10) derart geformt ist, daß im Bereich zwischen den Lichtsenderreihen (13, 14) eine Flüssigkeitsauffangrinne (34) gebildet wird.

11. Vorrichtung nach einem oder mehreren der Ansprüche 3 bis 10, dadurch gekennzeichnet, daß die Lichtempfänger (17) in einem stegartig aus dem Gehäuse (32) der Vorrichtung (10) herausstehenden schmalen Gehäusearm (35) angeordnet sind.

12. Vorrichtung nach einem oder mehreren der Ansprüche 3 bis 11, dadurch gekennzeichnet, daß die Lichtempfänger (17) lichteintrittsseitig mit einer lichtdurchlässigen Abdeckung (36) abgedeckt sind.

13. Vorrichtung nach einem oder mehreren der Ansprüche 3 bis 12, dadurch gekennzeichnet, daß das Anzeigemittel (26) eine numerische Anzeige zur Anzeige des Durchmessers (25) des Darmes (19) in bestimmten Maßeinheiten ist.

14. Vorrichtung nach einem oder mehrere der Ansprüche 3 bis 13, dadurch gekennzeichnet, daß eine Mehrzahl von Anzeigemitteln (37), die jeweils einem bestimmten Durchmesserintervall zugeordnet sind, vorgesehen ist, wobei die Auswerteeinrichtung (24) den ermittelten Darmdurchmesser (25) dem Anzeigemittel (37) des entsprechenden Durchmesserintervalls selbständig zuordnet.

Fig. 1

Fig. 2

Fig. 3

0 247 530

# Fig. 4

18

14    13

# Fig. 5

12
15
13
12

17
18

12
14
16
12

Fig. 6

Fig. 7

2,54 mm